Europäisches Patentamt

European Patent Office

Office européen des brevets

(19)

(11) Veröffentlichungsnummer : **0 228 596**
**B1**

(12) **EUROPÄISCHE PATENTSCHRIFT**

(45) Veröffentlichungstag der Patentschrift :
03.01.90

(21) Anmeldenummer : 86116870.6

(22) Anmeldetag : 04.12.86

(51) Int. Cl.⁵ : **C 08 L 83/04**// C08J3/20
,(C08L83/04, C08K5:01)

(54) **Farbige Siliconmassen.**

(30) Priorität : 17.12.85 DE 3544619

(43) Veröffentlichungstag der Anmeldung :
15.07.87 Patentblatt 87/29

(45) Bekanntmachung des Hinweises auf die Patenterteilung : 03.01.90 Patentblatt 90/01

(84) Benannte Vertragsstaaten :
AT BE CH DE ES FR GB IT LI NL SE

(56) Entgegenhaltungen :
US–A– 3 988 285
US–A– 4 357 438

(73) Patentinhaber : BAYER AG

D-5090 Leverkusen 1 Bayerwerk (DE)

(72) Erfinder : Schwabe, Peter, Dr.
Dudweiler Strasse 17
D-5090 Leverkusen 1 (DE)
Erfinder : Voigt, Reiner, Dipl.-Ing.
Gustav-Radbruch-Strasse 14
D-5090 Leverkusen 3 (DE)

EP 0 228 596 B1

**Beschreibung**

Die vorliegende Erfindung betrifft farbige Siliconmassen, wobei es sich um -Öle, Fette, Pasten, Harze, Emulsionen sowie Kautschuke sowie Vormischungen dafür handeln kann.

Siliconmassen bzw. -Öle, die auf Basis von Organopolysiloxanen bestehen, haben die vielfältigsten Anwendungsmöglichkeiten gefunden. So werden sie z. B. als Gleit- und Schmiermittel, Hydrauliköle, Fugendichtstoffe, Abformmassen, Papiertrennmittel u. v. a. eingesetzt (vgl. z. B. W. Noll, Chemie u. Technologie der Silicone, Verlag Chemie, Weinheim 1968).

Von Reaktionskomponenten abgesehen, werden in die Silicone, entsprechend den gewünschten Eigenschaften der Endprodukte, die verschiedensten Komponenten wie Füllstoffe, Additive, Farbstoffe usw. eingearbeitet. Farbige Siliconartikel lassen sich z. B. herstellen durch Verwendung von sog. Farbbatches aus Siliconölen und Farbpigmenten organischer und anorganischer Art. Diese Farbpigmente werden z. B. mittels Dissolver und/oder Walzenstahl in Siliconmassen fein verteilt. Ein wesentlicher Nachteil dieser Farbpasten besteht in der Sedimentation der Farbpigmente z. B. in Ölen, der oft schlechten Verteilung in den Siliconmassen, sowie der Nicht-Transparenz der so hergestellten Endprodukte. In Siliconen lösliche Farbstoffe würden diese Probleme nicht aufweisen, doch sind derartige Farbstoffe praktisch nicht bekannt bzw. die Farbauswahl ist begrenzt.

Es wurde nun überraschend gefunden, daß sich eine Vielzahl von Farbstoffen zur Anfärbung von Siliconen einsetzen lassen, wenn man den Siliconmassen Isoparaffine zusetzt. Auf diese Weise können die in den Isoparaffinen löslichen Farbstoffe auch in die Siliconmassen eingearbeitet werden.

Gegenstand der vorliegenden Erfindung sind somit farbige Siliconmassen enthaltend :

    a) Organopolysiloxane,
    b) Isoparaffine mit 8 bis 24 C-Atomen,
    c) in den Isoparaffinen (b) lösliche organische Farbstoffe sowie ggf.
    d) weitere an sich bekannte Zusatzstoffe.

Als Organopolysiloxane im Sinne der vorliegenden Erfindung sind Polydimethylsiloxane, die auch andere Substituenten wie z. B. Hydroxyl, Hydrogen, Vinyl, Allyl, Phenyl, Acryl, Methacryl aufweisen können, zu verstehen. Aus diesen Grundsubstanzen werden in bekannter Weise Fette, Pasten, Gummis, Harze, Lacke, Überzüge, Beschichtungen, Emulsionen usw. hergestellt.

Die Isoparaffine (b) enthalten 8 bis 24 Kohlenstoffatome im Molekül. Vorzugsweise werden 2,2,4,4,6,6,8-Heptamethylnonan $C_{16}H_{34}$ (Isohexadecan) und 2,2,4,4,6,6,8,8,10-Nonamethylundecan $C_{20}H_{42}$ (Isoeikosan) eingesetzt. Aber auch die ungesättigten Verbindungen wie Isohexadecen $C_{16}H_{32}$ und Isoeikosen $C_{20}H_{40}$ sind geeignet.

Als Farbstoffe eignen sich in Isoparaffinen lösliche organische Farbstoffe der verschiedensten Typen. Beispielsweise seien Farbstoffe vom Typ oder Styrol-, Pyrazolon-, Chinophthalon-, Naphthazin-, Perinon-, Anthrachinon-, Cumarin-, Thioxanthen-, Thioindigo-, Azo-(Mono- oder Disazo)-Farbstoffe oder auch Mischungen daraus genannt. Bevorzugt werden Farbstoffe der Makrolex- bzw. Ceres-Reihe verwendet.

Die erfindungsgemäßen Siliconmassen erhält man durch Lösen des paraffinlöslichen Farbstoffes in Isoparaffin und anschließendem Einarbeiten dieser Farblösung in die Siliconmasse, wobei das Isoparaffin als Lösungsvermittler dient. Die Verträglichkeit Silicon/Isoparaffin läßt sich durch den « Reißverschlußeffekt » der seitenständigen Methylgruppen des Isoparaffines mit den Polydimethylsiloxanteiles der Siliconmasse erklären, da n-Paraffine in Siliconen unlöslich sind und aufschwimmen bzw. ausschwitzen.

Weiterhin weisen die erfindungsmäßigen Siliconmassen keine Farbstoffsedimentation auf und können transparent sein.

Nicht transparente, Füllstoff enthaltende Siliconmassen können ebenso auf diese Weise eingefärbt werden. Man erhält hierdurch pastellfarbene Produkte.

Die Farbstoffe können in einem relativ breiten Konzentrationsbereich angewandt werden. Normalerweise werden etwa 0,1-3 Gew. % (ggf. bis zur Sättigungsgrenze) dem Isoparaffin zugegeben. Das Isoparaffin wiederum kann dem Silicon in Mengen von 1 bis 30 Gew. %, bevorzugt 5-15 Gew. % zugegeben werden. Auf diese Weise kann die Farbigkeit der Siliconmassen beliebig eingestellt werden. (Die Mengen beziehen sich auf die Gesamtmasse).

Darüber hinaus können Isoparaffine als Lösungsmittel von Duft- und Geschmacksstoffen in Siliconmassen dienen.

Die nachfolgenden Beispiele, in denen die angegebenen Teile Gewichtsteile bedeuten, erläutern die Erfindung.

Beispiel 1

0,5 Teile Macrolex blau RR werden in 99,5 Teilen Isoeikosan $C_{20}H_{42}$ gelöst. Es entstand eine tiefblaue, klare und permanente Lösung.

Eine Basiskomponente wurde hergestellt durch Vermischen von 30 Teile o. g. Farblösung, 45 Teilen vinylendgestopptem Polydimethylsiloxan mit einer Viskosität von 10.000 mPa.s bei 20 °C und 25 Teilen SiH-gruppenhaltigem Polydimethylsiloxan mit einer Viskosität von 120 mPa.s bei 20 °C.

Die Katalysatorkomponente wurde erhalten durch Vermischen von 30 Teilen o. g. Farbmischung, 69,8 Teilen o. g. vinylendgestopptem Polydimethylsiloxan und 0,2 Teilen eines Komplexes aux Platin und Divinyltetravinyldisiloxan.

Beide Komponenten waren tiefblau, klar und lagerstabil. Sie wurden im Verhältnis 1:1 gemischt und man erhielt durch Polyadditionsvernetzung einen tiefblauen, klaren Gummi, welcher nach Lagerung bei 25 °C während einer Woche auf Filterpapier kein Ausschwitzen von Paraffinöl und/oder Farbstoff aufwies.

Beispiel 2

0,5 Teile Macrolex blau RR werden in 99,5 Teilen Isohexadecan $C_{16}H_{34}$ gelöst. Es entstand eine tiefblaue, klare und permanente Lösung.

Obengenannte Farblösung wurde wie in Beispiel 1 in die Basis- und Katalysatorkomponente eingemischt, wobei beide Komponenten tiefblau, klar und lagerstabil waren. Der daraus hergestellte Gummi war ebenfalls tiefblau und klar und zeigte nach einwöchiger Lagerung bei 25 °C keine Verfärbung des Filterpapieres.

Beispiel 3 (Vergleich)

0,5 Teile Macrolex blau RR (Solvent blue 97) wurden in 99,5 Teilen n-Paraffinöl mit einer Viskosität von 180 mPa.s bei 20 °C gelöst. Es entstand eine tiefblaue, klare und permanente Lösung.

Nach Einarbeiten o. g. Farblösung in die Basis- und Katalysatorkomponente gemäß Beispiel 1 erhielt man blaue, Schlieren und Farbstoffpartikel aufweisende Flüssigkeiten, die sich nach 5 Tagen Lagerung bei 25 °C jeweils zu einer wenig blauen Siliconölphase und einer tiefblauen Paraffinölphase getrennt hatten. Der aus der frisch hergestellten Basis- und Katalysatorkomponente hergestellte Gummi war blau, wies Farbstoffpartikel auf und färbte und fettete nach wenigen Minuten Filterpapier an.

Beispiel 4

30 Teile der Farblösung aus Beispiel 1 wurden in 70 Teilen hydroxylendgestopptem Polydimethylsiloxan mit einer Viskosität von 2.000 mPa.s bei 20 °C eingemischt. Es entstand eine tiefblaue, klare und lagerstabile Flüssigkeit.

10 Teile dieser Flüssigkeit wurden mit einem Teil einer Komponente aus Dibutylzinndilaurat und Polyethoxysiloxan vermischt. Der durch Polykondensationsvernetzung hergestellte Gummi war tiefblau, klar und verfärbte das Filterpapier nicht.

Beispiel 5

30 Teile der Farblösung aus Beispiel 2 und 70 Teile des hydroxylendgestoppten Polydimethylsiloxans aus Beispiel 4 ergaben nach Vermischen eine tiefblaue, klare und lagerstabile Flüssigkeit.

Der gemäß Beispiel 4 hergestellte Gummi war ebenfalls tiefblau und klar und zeigte nach einwöchiger Lagerung bei 25 °C auf dem Filterpapier keine Verfärbung der Unterlage.

Beispiel 6 (Vergleich)

Durch Vermischen von 30 Teilen der Farblösung aus Beispiel 3 und 70 Teilen des hydroxylendgestoppten Polydimethylsiloxanes erhielt man eine blaue, Schlieren und Farbstoffpartikel aufweisende Flüssigkeit, die sich nach einer Lagerung über 5 Tage bei 25 °C in eine wenig blaue Silicon- und eine tiefblaue Paraffinölphase getrennt hatte.

Der gemäß Beispiel 4 hergestellte Gummi war blau und enthielt Farbstoffpartikel. Schon nach wenigen Minuten Lagerung bei 25 °C der Gummis auf Filterpapier war die Unterlage angefettet und angefärbt.

## Patentansprüche

1. Farbige Silikonmassen enthaltend
   a) Organopolysiloxane,
   b) Isoparaffine mit 8-24 C-Atomen
   c) in den Isoparaffinen (b) lösliche organische Farbstoffe sowie ggf.
   d) weitere an sich bekannte Zusatzstoffe.

2. Silikonmassen gemäß Anspruch 1, dadurch gekennzeichnet, daß die Organopolysiloxane Trimethyl-siloxy-, Hydroxy-, Vinyl-, Allyl-, Acryl-, Methacryl-, Phenylgruppen und/oder Si-H-Gruppen enthalten.

3. Silikonmassen gemäß einem der Ansprüche 1 oder 2 dadurch gekennzeichnet, daß als Isoparaffine 2,2,4,4,6,6,8-Heptamethylnonan ($C_{16}H_{34}$) und/oder 2,2,4,4,6,6,8,8,10-Nonamethyl-undecan ($C_{20}H_{42}$) verwendet werden.

## Claims

1. Coloured silicone compositions containing
   a) organopolysiloxanes,
   b) isoparaffins having 8-24 C atoms
   c) organic dyestuffs which are soluble in the isoparaffins (b) and, if appropriate,
   d) further additives which are known per se.

2. Silicone compositions according to Claim 1, characterized in that the organopolysiloxanes contain trimethylsiloxy groups, hydroxyl groups, vinyl groups, allyl groups, acrylyl groups, methacrylyl groups, phenyl groups and/or Si-H groups.

3. Silicone compositions according to one of Claims 1 or 2, characterized in that 2,2,4,4,6,6,8-heptamethylnonane ($C_{16}H_{34}$) and/or 2,2,4,4,6,6,8,8,10-nonamethylundecane ($C_{20}H_{42}$) are used as isoparaffins.

## Revendications

1. Masses de silicones colorées contenant :
   a) des organopolysiloxannes,
   b) des isoparaffines en $C_8$-$C_{24}$,
   c) des colorants organiques solubles dans les isoparaffines (b) et éventuellement
   d) d'autres additifs connus.

2. Masses de silicones selon la revendication 1, caractérisées en ce que les organopolysiloxannes contiennent des groupes triméthylsiloxy, hydroxy, vinyles, allyles, acryles, méthacryles, phényles et/ou des groupes Si-H.

3. Masses de silicones selon la revendication 1 ou 2, caractérisées en ce que l'on utilise comme isoparaffines le 2,2,4,6,6,8-heptaméthylnonane ($C_{16}H_{34}$) et/ou le 2,2,4,4,6,6,8,8,10-nonaméthylundécane ($C_{20}H_{42}$).